# FASCICULE DE BREVET EUROPEEN

(11) **EP 2 259 878 B1**
(45) Date de publication et mention de la délivrance du brevet: **24.08.2011**
(21) Numéro de dépôt: 09715653.3
(22) Date de dépôt: 09.02.2009
(51) Int. Cl.: B07C 3/14

(54) **PROCEDE POUR LE TRI D'ENVOIS POSTAUX INCLUANT UNE GESTION OPTIMISEE DE L'ESPACE D'EXPLORATION DES SIGNATURES D'ENVOIS**
VERFAHREN ZUR SORTIERUNG VON POSTSENDUNGEN EINSCHLIESSLICH OPTIMIERTER VERWALTUNG DES NUTZUNGSRAUMS VON SENDUNGSKENNZEICHNUNGEN
METHOD FOR SORTING POSTAL ITEMS INCLUDING AN OPTIMISED MANAGEMENT OF THE EXPLORATION SPACE OF ITEM SIGNATURES

(30) Priorité: 26.02.2008 FR 0851204
(43) Date de publication de la demande: 15.12.2010
(73) Titulaire: Solystic, 94257 Gentilly Cedex (FR)
(72) Inventeur: CAILLON, Christophe, F-91220 Bretigny Sur Orge (FR)
(74) Mandataire: Prugneau, Philippe
(86) Numéro de dépôt international: PCT/FR2009/050205
(87) Numéro de publication internationale: WO 2009/106778

(56) Documents cités:
- EP-A- 1 222 037
- WO-A-2008/053024
- FR-A- 2 866 252
- FR-A- 2 881 663

## Description

L'invention concerne un procédé pour le tri d'envois postaux en au moins deux passes de tri en machine de tri avec des sorties de tri dans lesquelles sont dirigés les envois depuis une entrée de dépilage, procédé dans lequel en première passe de tri on forme des images de la surface des envois pour dériver des premières signatures d'images servant d'identifiants uniques pour les envois en machine et dans lequel en seconde passe de tri des envois, on forme de nouveau une image de la surface d'un envoi courant pour dériver une signature d'image courante associée à l'envoi courant et on balaie un ensemble de premières signatures d'images regroupées dans un espace mémoire d'exploration pour détecter une concordance avec ladite signature courante, et dans lequel les envois sont transférés manuellement à l'aide de bacs de stockage des sorties de tri vers l'entrée de dépilage entre les deux passes de tri, par exemple décrit dans FR-A-2 866 252.

Le processus pour générer de telles signatures d'images ou empreintes numériques pour les envois postaux et comment comparer deux signatures d'images pour détecter une concordance est décrit dans le document de brevet EP-1519796. Sur la figure 1, on a illustré une face d'un envoi postal P sur laquelle est inscrite une adresse de distribution A. La signature d'image servant d'identifiant unique pour l'envoi selon le procédé de l'invention est dérivée de l'image de la surface de l'envoi comportant l'adresse de distribution A et comporte typiquement une composante image représentative des caractéristiques graphiques de l'image (par exemple les histogrammes des niveaux de gris dans différentes parties distinctes de plusieurs quadrillages de l'image) et une composante postale représentative des caractéristiques de l'adresse de distribution A (nombre de signes dans l'adresse, position du bloc d'adresse dans l'image, etc...). Ces deux composantes ne doivent pas en principe être corrélées l'une à l'autre pour assurer une parfaite unicité de l'identifiant.

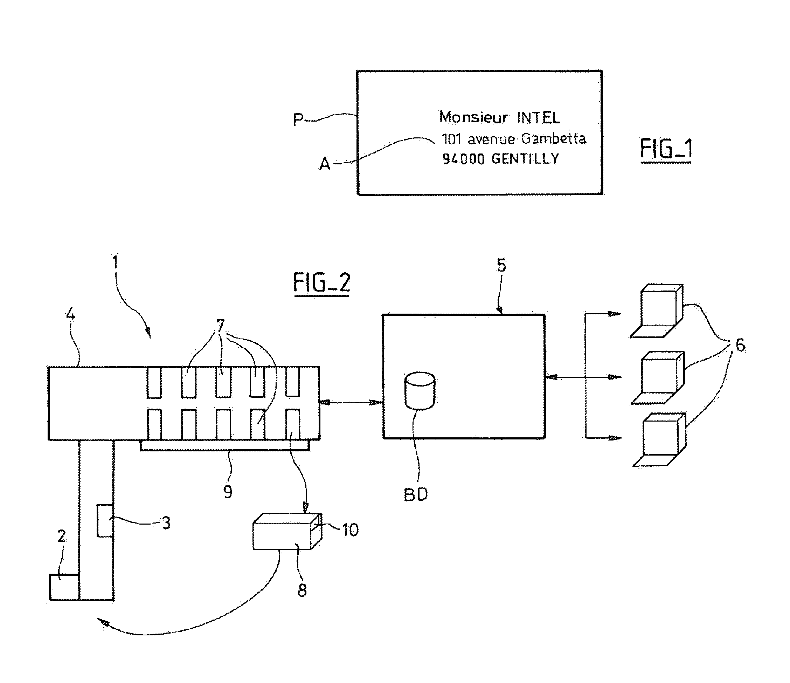

Sur la figure 2, on a représenté de façon très schématique une machine de tri 1 avec un dépileur d'entrée 2 pour l'insertion en machine des envois, un dispositif 3 de formation d'images de la surface des envois, un convoyeur 4 qui dirige les envois en série vers des sorties de tri 7. La machine de tri 1 est sous le contrôle/commande d'une unité de traitement de données 5 ayant une mémoire BD. L'unité 5 peut être reliée de façon connue en soi à des unités de vidéo-codage 6.

On a également illustré un bac de stockage 8 avec lequel un opérateur transfert les envois des sorties de tri vers l'entrée de la machine entre deux passes de tri (flèche entre les sorties 7 et le bac 8 et flèche entre le bac 8 et le dépileur 2). Il faut comprendre qu'on utilise plusieurs bacs tels que 8 pour transférer les envois entre toutes les sorties 7 et l'entrée 2 de la machine. La référence 9 sur la figure 2 désigne un ensemble d'étiqueteuses qui fournissent sur commande des étiquettes codées 10 à apposer sur les bacs tels que 8. Un scanner (non montré) est prévu à l'entrée de la machine pour relire les étiquettes des bacs et les faire identifier par l'unité 5.

Classiquement, lors d'une première passe de tri, des envois tels que P sont donc insérés manuellement par l'opérateur dans le dépileur d'entrée 2 de la machine de tri 1. Les envois sont dépilés pour être mis en série et convoyés sur chant devant le dispositif 3 pour former une image numérique de la surface de chaque envoi. Une signature d'image est dérivée de l'image de la surface de chaque envoi par l'unité 5 et est mise en correspondance dans la mémoire BD avec des données de tri lues dans l'image par reconnaissance automatique de caractères (OCR, « Optical Characters Récognition ») et/ou par vidéo-codage.

Les envois dirigés dans les sorties de tri sont ensuite transférés avec des bacs 8 dans l'entrée de la même machine de tri pour une nouvelle passe de tri. La seconde passe de tri pourrait le cas échéant être effectuée sur une autre machine de tri.

Lors de la seconde passe de tri, les envois sont vidés manuellement des bacs de stockage 8 par l'opérateur et placés dans le magasin du dépileur d'entrée 2 pour être de nouveau sérialisés et convoyés devant le dispositif 3 où une image de la surface de chaque envoi courant comportant l'adresse A est de nouveau formée et une signature d'image courante pour chaque envoi courant est de nouveau calculée par l'unité 5. A partir d'une signature courante, l'unité 5 balaie en mémoire les signatures calculées lors de la première passe de tri pour détecter une concordance entre une de ces signatures et la signature courante en vue de récupérer des données de tri dans la mémoire BD.

Dans le document EP-1222037, il est décrit une méthode pour limiter l'espace d'exploration des signatures à balayer en mémoire en s'appuyant sur un respect strict de l'ordre chronologique des envois dans les bacs puis dans le magasin du dépileur d'entrée.

Toutefois, avec des sorties de tri du type à accumulation dans lesquelles les envois sont empilés à l'aide d'un empileur ou « tasseur », il peut arriver que cet ordre chronologique soit altéré, par exemple en cas de mauvaise manipulation des envois lors de leur stockage ou de leur vidage dans un bac.

Ce procédé connu d'optimisation de la dimension de l'espace mémoire d'exploration de signatures d'images n'est donc pas adapté à une machine de tri avec des sorties de tri à accumulation, c'est-à-dire comportant un empileur ou « tasseur ». Or ce type de sorties de tri est très employé pour le tri du courrier au format C5 selon la norme ISO-269.

Le but de la présente invention est donc de proposer un procédé pour le tri d'envois postaux dans une machine de tri notamment avec des sorties de tri à accumulation utilisant l'identification des envois en mémoire par des signatures d'image et dans lequel la dimension de l'espace mémoire d'exploration des signatures en seconde passe de tri est optimisée y compris quand l'ordre chronologique des envois est altéré entre la première passe de tri et la seconde passe de tri.

Un autre but de la présente invention est de proposer un tel procédé capable de fonctionner dans un environnement de tri multi-machines et/ou multi-sites dans lequel les contraintes d'exploitation font qu'il n'est pas toujours possible de maintenir une homogénéité du flux de courrier entre les deux passes de tri du fait des nombreuses manipulations du courrier par les opérateurs.

A cet effet, l'invention a pour objet un procédé pour le tri d'envois postaux en au moins deux passes de tri en machine de tri avec des sorties de tri dans lesquelles sont dirigés les envois depuis une entrée de dépilage, procédé dans lequel en première passe de tri on forme des images de la surface des envois pour dériver des premières signatures d'images servant d'identifiants uniques pour les envois en machine et dans lequel en seconde passe de tri des envois, on forme de nouveau une image de la surface d'un envoi courant pour dériver une signature d'image courante associée à l'envoi courant et on balaie un ensemble de premières signatures d'images regroupées dans un espace mémoire d'exploration pour détecter une concordance avec ladite signature courante, et dans lequel les envois sont transférés manuellement à l'aide de bacs de stockage des sorties de tri vers l'entrée de dépilage entre les deux passes de tri, caractérisé en ce qu'il comprend en outre les étapes suivantes :
- lors de la première passe de tri, on enregistre en mémoire machine en correspondance avec chaque première signature associée à un envoi une première information de désignation (ST) indicative d'un numéro de sortie de tri vers laquelle est dirigé l'envoi ; on enregistre en mémoire en correspondance avec la première signature associée audit envoi une seconde information temporelle fournie par une horloge ; on appose sur chaque bac de stockage dans lequel on transfert des envois prélevés d'une sortie de tri une étiquette codant une troisième information de désignation indicative du numéro de ladite sortie de tri et une quatrième information temporelle fournie par ladite horloge,
- lors de la seconde passe de tri, sur présentation en entrée de dépilage d'un bac de stockage courant rempli d'envois, on récupère de l'étiquette apposée sur le bac courant lesdites troisième et quatrième informations, on identifie parmi lesdites premières signatures enregistrées en mémoire une signature de référence ayant une première et une seconde information qui correspondent respectivement aux dites troisième et quatrième informations récupérées sur l'étiquette du bac courant et on charge dans l'espace mémoire d'exploration des premières signatures chronologiquement contigües à ladite signature de référence ayant une même première information de désignation, le nombre de premières signatures chronologiquement contigües dans l'espace mémoire d'exploration étant déterminé à partir des capacités maximales de stockage d'envois dans un bac et dans une sortie de tri.

Le procédé selon l'invention peut présenter les particularités suivantes :
- on comptabilise le nombre d'envois dirigés vers chaque sortie de tri en première passe de tri, on génère la seconde information temporelle quand on détecte qu'une sortie de tri a accumulé un nombre prédéterminé d'envois et on affecte aux signatures de ces envois ladite seconde information temporelle;
   - on surveille l'activité d'accumulation de chaque sortie de tri en première passe de tri, on génère la seconde information temporelle quand on détecte qu'une sortie de tri n'a pas accumulé d'envois depuis une période de temps prédéterminée et on affecte aux signatures des envois dans cette sortie de tri ladite seconde information temporelle;
   - on génère la seconde information temporelle en réponse à la détection de la terminaison de la première passe de tri et on affecte aux signatures des envois dans les sorties de tri ladite seconde information temporelle;
   - lesdites troisième et quatrième informations sont apposées sur une étiquette de bac sous la forme d'un code à barres lisible par scanner.

Selon le procédé de l'invention, on exploite donc une certaine corrélation entre l'emplacement spatial des envois dans les bacs à un instant donné et l'emplacement spatial des signatures à cet instant dans la suite chronologique des signatures enregistrées en mémoire lors de la première passe de tri.

En pratique, l'opérateur peut transférer les envois d'une sortie de tri à accumulation dans un bac vide avant, pendant ou après avoir récupéré une étiquette datée à apposer sur le bac.

Ces envois peuvent donc être ceux déjà présents dans la sortie de tri avant la date de l'étiquette et/ou ceux présents dans la sortie de tri après la date de l'étiquette avec comme limite que la sortie de tri à la date de l'étiquette peut être pleine ou vide d'envois et qu'un seul bac de stockage peut être en cours de remplissage en même temps par sortie de tri.

Si on désigne par MXNbPPB la capacité maximale de stockage en envois d'un bac et par MXNbPPST la capacité maximale de stockage en envois d'une sortie de tri à accumulation, on peut dans un premier temps limiter la taille de l'espace d'exploration des signatures (en nombre de signatures à balayer) désigné par DimEspRech à une valeur calculée à partir de MXNbPPB et de MXNbPPST.

Si en pratique, l'opérateur récupère toujours une étiquette datée avant de charger un bac vide avec des envois d'une sortie de tri, on peut considérer que si à la date de l'étiquette, la sortie de tri est pleine, les envois transférés dans le bac ont été prélevés parmi MXNbPPST envois dans la sortie de tri et que si à la date de l'étiquette la sortie de tri est vide, les envois transférés dans le bac ont été prélevés parmi MXNbPPB envois successifs arrivant dans la sortie de tri. Dans ce cas, on constitue l'espace d'exploration optimisé selon l'invention avec MXNbPPST signatures chronologiquement contigües ayant une seconde information temporelle immédiatement antérieure à la date de l'étiquette et avec MXNbPPB signatures chronologiquement contigües ayant une seconde information temporelle immédiatement postérieure à la date de l'étiquette.

Si l'opérateur récupère toujours une étiquette datée seulement après le chargement du bac vide en envois d'une sortie de tri, on peut considérer que si à la date de l'étiquette, la sortie de tri est vide, les envois transférés dans le bac ont été prélevés parmi MXNbPPB envois successifs arrivant dans la sortie de tri et que si à la date de l'étiquette, la sortie de tri est pleine, les envois transférés dans le bac ont été prélevés parmi MXNbPPST envois dans la sortie de tri. Dans ce cas, on constitue l'espace d'exploration optimisé selon l'invention avec MXNbPPST + MXNbPPB signatures chronologiquement contigües ayant une seconde information temporelle immédiatement antérieure à la date de l'étiquette.

Si l'opérateur récupère l'étiquette datée au cours du chargement du bac, on constitue l'espace d'exploration optimisé selon l'invention avec MXNbPPST + MXNbPPB signatures chronologiquement contigües ayant une seconde information temporelle immédiatement antérieure à la date de l'étiquette et avec MXNbPPB signatures chronologiquement contigües ayant une seconde information temporelle immédiatement postérieure à la date de l'étiquette.

On voit donc que l'optimisation de la dimension de l'espace mémoire d'exploration des signatures selon l'invention est liée aux capacités de stockage des sorties de tri et des bacs. Si on considère des bacs pouvant contenir 500 lettres au format C5 et des sorties de tri pouvant accumuler 600 lettres au format C5, on peut limiter la dimension de l'espace mémoire d'exploration des signatures à globalement 1100 signatures.

Un exemple de mise en oeuvre du procédé selon l'invention est décrit plus en détail ci-après et illustré par les dessins. Cette description n'est donnée qu'à titre d'exemple indicatif et nullement limitatif de l'invention.
La figure 1 illustre de façon schématique une face d'un envoi postal avec une adresse de destinataire.
La figure 2 montre de façon très schématique une machine de tri postal pour la mise en oeuvre du procédé selon l'invention.
La figure 3 illustre sous la forme d'un organigramme le déroulement du procédé selon l'invention lors d'une première passe de tri.
La figure 4 illustre sous la forme d'un organigramme le déroulement du procédé selon l'invention lors d'une deuxième passe de tri.
La figure 5 illustre de façon très schématique la mise en correspondance entre les signatures, les informations de désignation de sorties de tri et les informations temporelles.

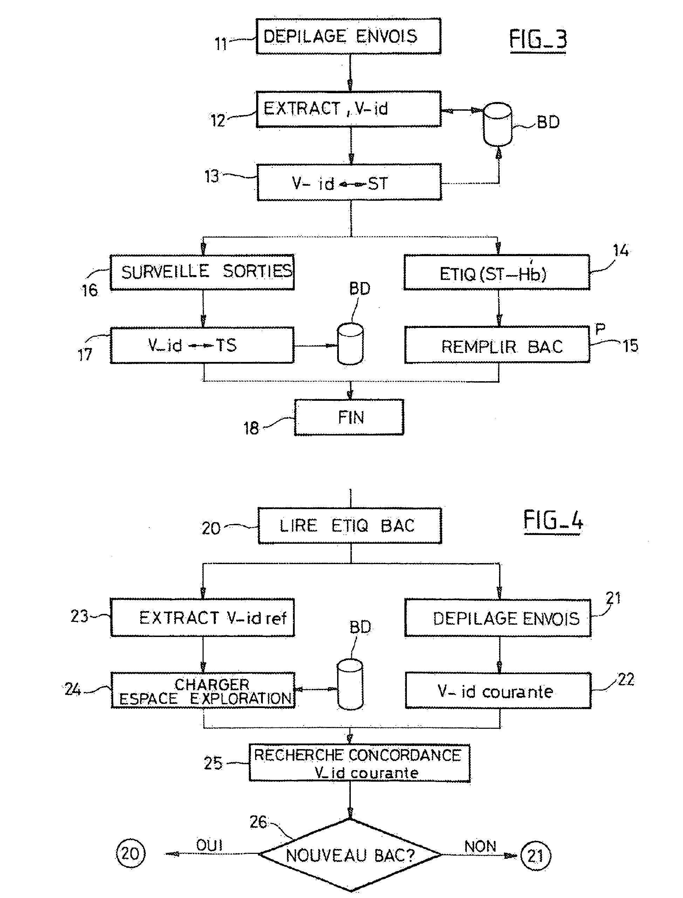

Sur les figures 3 et 4, on a illustré sous la forme d'un organigramme très simplifié un mode de mise en oeuvre du procédé selon l'invention pour un tri en deux passes de tri sur une même machine de tri telle que la machine 1 équipée de sorties de tri du type à accumulation.

En se référant à la figure 3, dans une étape initiale 11 de la première passe de tri, des envois sont chargés dans le magasin du dépileur d'entrée 2 de la machine de tri 1.

Les envois sont dépilés et convoyés en série sur chant jusqu'au dispositif d'acquisition d'images 3. L'engagement de la première passe de tri peut être reconnue par la machine 1 sur détection du passage préalable avant les envois d'une carte « séparatrice » ou intercalaire de commande comme cela est bien connu.

A l'étape 12, le dispositif 3 forme une image numérique de chaque envoi comportant l'adresse A et l'unité 5 extrait de chaque image par OCR une information de tri correspondant à l'adresse A de l'envoi considéré et dérive de l'image par calcul une signature d'image V-id servant d'identifiant unique pour l'envoi considéré.

Dans l'étape 13, ces signatures ou empreintes numériques V-id associées aux envois successifs en première passe de tri sont enregistrées en mémoire BD par exemple dans une base d'information en correspondance avec les informations de tri associées aux envois récupérées par OCR ou par vidéo-codage. L'unité 5 enregistre en plus en correspondance avec chaque signature V-id dans la mémoire BD une information de désignation ST indicative du numéro de sortie de tri vers laquelle est dirigé l'envoi associé à la signature considérée. On entend par numéro de sortie de tri tout identifiant unique de sortie de tri reconnaissable par l'unité 5.

Au cours de la première passe de tri, les envois successifs s'accumulent dans les sorties de tri 7 qui doivent donc être vidées au fur et à mesure qu'elles sont remplies.

A l'étape 14, l'opérateur actionne une étiqueteuse 8 associée à une sortie de tri contenant des envois qui lui délivre une étiquette de bac 10. Cette étiquette est dans le cas d'exemple apposée par l'opérateur sur une face d'un bac vide 8 qui est ensuite rempli à l'étape 15 avec les envois prélevés dans cette sortie de tri.

Selon l'invention, dans l'étape 14, l'étiquette 10 produite par l'étiqueteuse 8 est un code, par exemple un code à barres, qui encode une information de destination ST représentative du numéro de la sortie de tri 7 qui est déchargée dans le bac recevant l'étiquette et une information temporelle Hb fournie par une horloge (non représentée). L'information temporelle Hb est par exemple la date/instant d'étiquetage. Il faut comprendre que durant la première passe de tri, l'opérateur peut ainsi remplir plusieurs bacs de stockage 8 pour une même sortie de tri 7 de la machine et que les bacs pour cette sortie de tri auront par conséquent des codes qui diffèrent au niveau de l'information temporelle Hb.

Selon l'invention, en parallèle au stockage des envois dans les sorties de tri 7 de la machine et de leur transfert dans les bacs 8, l'unité 5 enregistre en mémoire BD des informations temporelles fournies par l'horloge en correspondance avec les signatures V-id.

Dans le cas de l'exemple, ces informations temporelles associées aux signatures sont générées de la manière suivante.

L'unité 5 surveille dans l'étape 16 le niveau d'accumulation des envois dans toutes les sorties de tri 7. Si l'unité 5 détecte que dans une sortie de tri considérée, le nombre N d'envois accumulés franchit une certaine valeur de seuil, elle constitue dans l'étape 17 un fichier en mémoire BD dans lequel elle regroupe toutes les signatures générées pour les N derniers envois présents dans cette sortie de tri jusqu'au moment de ladite détection. Le nom de ce fichier encode l'information de destination ST correspondant à la sortie de tri considérée ainsi qu'une information temporelle TS qui peut être la date/instant de création du fichier par exemple, ou encore la date/instant de détection dudit franchissement de seuil. Dans ce mode de réalisation, une certaine information temporelle TS est donc mise en correspondance avec plusieurs signatures regroupées dans un fichier. Ce fichier peut être vu comme une sorte de « bac virtuel » pour les signatures.

La valeur N du seuil de comptabilisation est un paramètre réglable du système mais elle est choisie de préférence inférieure à la capacité maximale de stockage en envois d'une sortie de tri et à la capacité maximale de stockage en envois d'un bac. On a constaté qu'une valeur N égale à 150 convenait bien pour une configuration avec une capacité de stockage de bac de 500 envois et une capacité de stockage de sortie de tri de 600 envois.

Au cours du remplissage complet d'une sortie de tri, on peut donc avoir plusieurs franchissements successifs de cette valeur de seuil et donc autant de fichiers de signatures distincts associés à la sortie de tri considérée.

Pour éviter le blocage de ce processus de création de fichiers de signatures, l'unité 5 est agencée pour surveiller en plus l'activité d'accumulation d'envois dans chaque sortie de tri. Si elle détecte que dans une sortie de tri, il n'y a pas eu d'accumulation d'envoi depuis une période de temps T prédéterminée, elle construit encore un nouveau fichier associé à cette sortie de tri regroupant les signatures d'un certain nombre d'envois présents dans cette sortie de tri au moment de cette détection. Ce fichier a encore un nom qui encode une information temporelle TS qui peut être la date/instant de création du fichier par exemple, ou encore la date/instant de détection du défaut d'activité d'accumulation dans la sortie de tri comme indiqué plus haut. L'unité 5 peut encore détecter l'instant de terminaison de la première passe de tri et créer pour chaque sortie de tri un dernier fichier regroupant chacun les signatures d'un certain nombre d'envois présents dans la sortie de tri considérée au moment de la terminaison de la passe de tri à l'étape 18.

On doit comprendre, que ces fichiers ont des contenus disjoints et que dans chaque fichier, les signatures sont enregistrées selon un ordre chronologique. Ces fichiers segmentent par conséquent l'ensemble des signatures en blocs disjoints de 150 signatures ou moins.

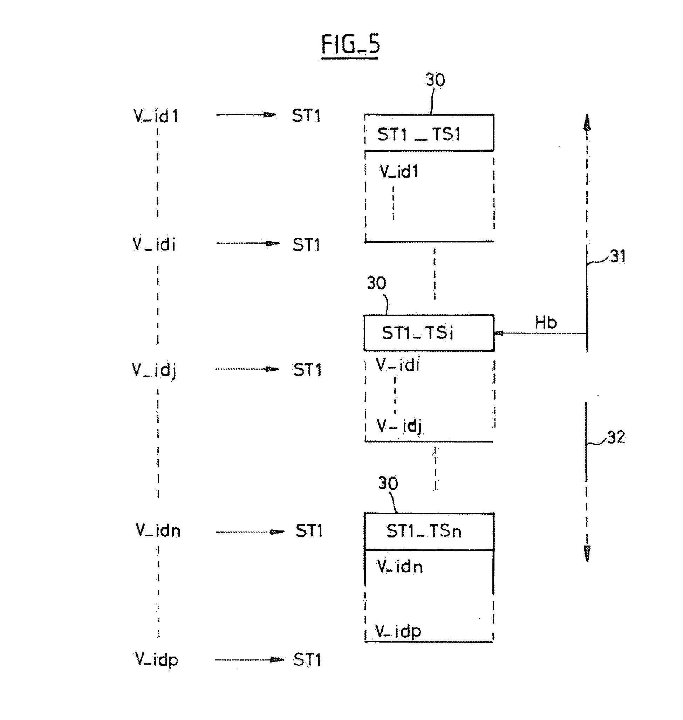

La figure 5 illustre un exemple de segmentation en fichiers de l'ensemble des signatures V-id dans la mémoire BD selon l'invention.

Sur cette figure 5, on a représenté des signatures V-id1 ... V-idp ordonnées de haut en bas de façon chronologique au fur et à mesure qu'elles sont générées par l'unité 5.

Pour simplifier l'illustration, ces signatures correspondent toutes à des envois accumulés dans une même sortie de tri ST1.

Des fichiers 30 regroupent chacun un sous-ensemble de ces signatures V-id d'envois dirigés vers la sortie de tri ST1. Pour chaque fichier 30, une certaine information temporelle TS a été générée par l'unité 5 dans le nom du fichier. Le nom du fichier est symbolisé par un entête formé du couple d'information (ST-TS). Le fichier 30 avec l'entête ST1-TS1 contient par exemple un premier groupe de signatures associées à des envois accumulés dans la sortie de tri ST1 jusqu'à une première détection du franchissement du seuil de comptabilisation N par l'unité 5. Le fichier 30 avec l'entête ST1-TSi contient par exemple un second groupe de signatures associées à des envois accumulés dans la sortie de tri ST1 jusqu'à la première détection du franchissement du seuil d'inactivé T par l'unité 5. Le fichier 30 avec l'entête ST1-TSn contient par exemple un troisième groupe de signatures associés à des envois accumulés dans la sortie de tri ST1 jusqu'à la détection de la terminaison de la première passe de tri par l'unité 5. Il faut donc considérer que les fichiers 30 sont illustrés l'un en dessous de l'autre pour figurer un ordre chronologique de l'information TS identique à l'ordre chronologique des signatures V-id. En particulier, TS1 est une date/instant plus ancienne que TSn. Pour les différentes sorties de tri, l'unité 5 génère donc plusieurs fichiers 30 qui peuvent ainsi être ordonnés de manière chronologique. Il faut comprendre que les dates ST, Hb enregistrées en regard des signatures d'une part et sur les étiquettes de bac d'autre part doivent être fournies par une même horloge ou par des horloges synchronisées.

A la fin de la première passe de tri, les bacs de stockage 8 remplis d'envois sont tous acheminés vers le dépileur d'entrée 2 de la machine 1 pour soumettre les envois à une seconde passe de tri.

La seconde passe de tri débute sur la figure 4 à l'étape 20 par une lecture par scanner de l'étiquette 10 d'un premier bac de stockage 8 pour récupérer les informations ST et Hb codées dans l'étiquette du bac.

A l'étape 21, les envois postaux contenus dans ce premier bac de stockage sont placés dans le magasin du dépileur 2 pour être dépilés et convoyés en série sur chant jusqu'au dispositif d'acquisition d'images 3. L'unité 5 dérive de l'image de chaque envoi courant une signature courante V-id dans l'étape 22.

En parallèle aux étapes 21 et 22, l'unité 5 balaie en mémoire BD dans l'étape 23 les noms de fichiers 30 construits en première passe de tri pour identifier celui qui comporte une information de destination ST identique à l'information de destination ST récupérée à l'étape 20 de l'étiquette du bac courant et une information temporelle TS qui approche le plus l'information temporelle Hb dérivée de l'étiquette du bac.

Sur la figure 5, on a représenté l'information temporelle Hb associée à l'étiquette du bac de stockage courant en regard du fichier 30 ayant l'entête ST1-TSi associé à la sortie de tri ST1 en considérant que TSi était la date postérieure à la date Hb et la plus approchante de la date Hb par rapport aux autres dates TS1, ...TSn.

Selon l'invention, la première signature V-idi dans le fichier 30 sur la figure 5 identifié à l'étape 23 détermine une référence à partir de laquelle l'unité 5 charge l'espace mémoire d'exploration des signatures.

Plus particulièrement, dans le cas d'exemple où l'opérateur récupère une étiquette de bac avant de remplir le bac avec des envois, cet espace mémoire d'exploration est chargé avec les 600 signatures (capacité maximale de stockage d'une sortie de tri) associées à la sortie de tri ST1 qui précèdent chronologiquement la signature de référence V-idi comme indiqué par la flèche 31 sur la figure 5 et avec les 500 signatures (capacité maximale de stockage d'un bac de stockage temporaire) associées à la sortie de tri qui suivent chronologiquement la signature de référence V-idi comme indiqué par la flèche 32 sur la figure 5.

Si l'information temporelle TS est commune à un bloc de signatures, la dimension de l'espace mémoire d'exploration est étendue au maximum à 1400 signatures en ajoutant l'équivalent de la dimension maximale d'un fichier 30 (150 signatures) de part et d'autre de la signature de référence V-idi.

Par ailleurs, le dimensionnement de l'espace d'exploration peut encore être légèrement augmenté de manière à tenir compte de situations particulières lors du déchargement des bacs de stockage dans le dépileur d'entrée 2 de la machine. On sait par exemple qu'il arrive qu'un opérateur puisse intercaler des envois pris dans un bac de stockage au milieu d'une pile d'envois dans le magasin du dépileur 2. Des situations de bourrage de la machine peuvent avoir les mêmes effets, c'est-à-dire rompre l'ordre chronologique des envois en entrée de la machine de tri pour la seconde passe de tri.

Ces situations sont prises en compte en sur dimensionnant l'espace mémoire d'exploration. Par exemple, dans une machine de tri 1 classique, le nombre d'envois convoyés entre le scanner d'étiquette de bac et le dispositif d'acquisition 3 correspond environ à cinq bacs de stockage. Dans ce cas, on étend l'espace d'exploration en multipliant sa dimension par cinq. Par exemple, dans l'exemple, l'espace d'exploration inclura 1400*5=7000 signatures. Des essais ont montré que cette taille d'espace d'exploration était suffisante pour obtenir un fonctionnement optimal de l'identification des envois par signatures d'image y compris quand l'ordre chronologique des envois est largement altéré entre les deux passes de tri.

A l'étape 25 sur la figure 4, l'unité 5 balaie les signatures dans l'espace mémoire d'exploration pour détecter une concordance avec la signature d'un envoi courant générée à l'étape 22. Les étapes 21,22 et 25 se répètent avec le même contenu de l'espace mémoire d'exploration jusqu'à ce qu'un nouveau bac est présenté en entrée de la machine à l'étape 26. Dans ce cas, l'unité 5 charge dans l'espace mémoire d'exploration des nouvelles signatures en déroulant les étapes 20,23 et 24 en tenant compte de la nouvelle information temporelle Hb associée à ce nouveau bac.

Pour maintenir un nombre limité de signatures dans l'espace mémoire d'exploration, l'unité 5 peut réaliser une purge systématique des signatures comme décrit dans le document de brevet PCT/FR2004/050764.

A l'issue de la détection d'une concordance entre l'empreinte courante et une empreinte de l'espace d'exploration à l'étape 25, l'unité 5 récupère dans la base d'information en mémoire BD des données de tri pour diriger l'envoi courant vers une sortie de tri. Le processus se répète pour des envois successifs et des bacs de stockage successifs jusqu'à la fin du tri des envois en seconde passe.

Le procédé selon l'invention peut s'appliquer pour un tri en plusieurs passes de tri sur plusieurs machines de tri de plusieurs sites de tri. Dans ce cas, il faut encoder dans les étiquettes de bacs une information de désignation ST qui identifie également la machine de tri et le site de tri. De la même façon, il faut également que l'information de désignation ST affectée aux signatures en première passe de tri identifie aussi la machine de tri et le site de tri.

## Revendications

1. Procédé pour le tri d'envois postaux en au moins deux passes de tri en machine de tri (1) avec des sorties de tri (7) dans lesquelles sont dirigés les envois depuis une entrée de dépilage (2), procédé dans lequel en première passe de tri on forme des images de la surface des envois pour dériver des premières signatures d'images (V-id) servant d'identifiants uniques pour les envois en machine et dans lequel en seconde passe de tri des envois, on forme de nouveau une image de la surface d'un envoi courant pour dériver une signature d'image courante associée à l'envoi courant et on balaie un ensemble de premières signatures d'images regroupées dans un espace mémoire d'exploration (31,32) pour détecter une concordance avec ladite signature courante, et dans lequel les envois sont transférés manuellement à l'aide de bacs de stockage (8) des sorties de tri vers l'entrée de dépilage entre les deux passes de tri, **caractérisé en ce qu'**il comprend en outre les étapes suivantes :
- lors de la première passe de tri, on enregistre (13) en mémoire machine en correspondance avec chaque première signature associée à un envoi une première information de désignation (ST) indicative d'un numéro de sortie de tri vers laquelle est dirigé l'envoi ; on enregistre (17) en mémoire en correspondance avec la première signature associée audit envoi une seconde information temporelle (TS) fournie par une horloge ; on appose sur chaque bac de stockage dans lequel on transfert des envois prélevés d'une sortie de tri une étiquette (9) codant une troisième information de désignation (ST) indicative du numéro de ladite sortie de tri et une quatrième information temporelle (Hb) fournie par ladite horloge,
- lors de la seconde passe de tri, sur présentation en entrée de dépilage d'un bac de stockage courant rempli d'envois, on récupère (20) de l'étiquette apposée sur le bac courant lesdites troisième et quatrième informations, on identifie (23) parmi lesdites premières signatures enregistrées en mémoire une signature de référence ayant une première et une seconde information qui correspondent respectivement aux dites troisième et quatrième informations récupérées sur l'étiquette du bac courant et on charge (24) dans l'espace mémoire d'exploration des premières signatures chronologiquement contigües à ladite signature de référence ayant une même première information de désignation, le nombre de premières signatures chronologiquement contigües dans l'espace mémoire d'exploration étant déterminé à partir des capacités maximales de stockage d'envois dans un bac et dans une sortie de tri.

2. Procédé selon la revendication 1, dans lequel on comptabilise le nombre d'envois dirigés vers chaque sortie de tri en première passe de tri, on génère la seconde information temporelle quand on détecte qu'une sortie de tri a accumulé un nombre prédéterminé d'envois et on affecte aux signatures de ces envois ladite seconde information temporelle.

3. Procédé selon la revendication 2, dans lequel on surveille l'activité d'accumulation de chaque sortie de tri en première passe de tri, on génère la seconde information temporelle quand on détecte qu'une sortie de tri n'a pas accumulé d'envois depuis une période de temps prédéterminée et on affecte aux signatures des envois dans cette sortie de tri ladite seconde information temporelle.

4. Procédé selon la revendication 2, dans lequel on génère la seconde information temporelle en réponse à la détection de la terminaison de la première passe de tri et on affecte aux signatures des envois dans les sorties de tri ladite seconde information temporelle.

5. Procédé selon l'une des revendications précédentes, dans lequel lesdites troisième et quatrième informations sont apposées sur une étiquette (10) de bac sous la forme d'un code à barres lisible par scanner.

## Claims

1. A method of sorting mailpieces in at least two sorting passes in a sorting machine (1) with sorting outlets (7) into which the mailpieces are directed from an unstacking inlet (2), wherein, in the first sorting pass, images are formed of the surfaces of the mailpieces so as to derive first image signatures (V-id) serving as unique identifiers for the mailpieces in the machine and wherein, in the second sorting pass for sorting the mailpieces, an image of the surface of a current mailpiece is formed again so as to derive a current image signature associated with the current mailpiece, and first image signatures grouped together in a set in an exploration memory space (31, 32) are scanned in order to detect a match with said current signature, and wherein the mailpieces are transferred manually using storage trays (8) from the sorting outlets to the unstacking inlet between the two sorting passes, said method being **characterized in that** it further comprises the following steps:
• during the first sorting pass: recording (13) designation first data (ST) indicative of the sorting outlet number to which the mailpiece is directed in a machine memory in correspondence with each first signature associated with a mailpiece; recording (17) time second data (TS) as delivered by a clock in the memory in correspondence with the first signature associated with said mailpiece;
and affixing a label (9) on each storage tray in which the mailpieces taken from a sorting outlet are transferred, the label coding designation third data (ST) indicative of said sorting outlet number and time fourth data (Hb) delivered by said clock;
• during the second sorting pass, when a current storage tray filled with mailpieces is presented at the unstacking inlet: retrieving (20) said third and fourth data from the label affixed on the current tray; identifying (23) a reference signature from among said first signatures recorded in the memory, said reference signature having first and second data that correspond respectively to said third and fourth data retrieved from the label on the current tray; and loading (24) into the exploration memory space first signatures that are chronologically contiguous with said reference signature and having the same designation first data, the number of chronologically contiguous first signatures in the exploration memory space being determined on the basis of the maximum mailpiece storage capacities of a tray and of a sorting outlet.

2. A method according to claim 1, wherein the number of mailpieces directed to each sorting outlet in the first sorting pass is counted, the time second data is generated when it is detected that a sorting outlet has accumulated a predetermined number of mailpieces, and said time second data is assigned to the signatures of those mailpieces.

3. A method according to claim 2, wherein the accumulation activity of each sorting outlet in the first sorting pass is monitored, the time second data is generated when it is detected that a sorting outlet has not accumulated any mailpieces for a predetermined period of time, and said time second data is assigned to the signatures of the mailpieces in said sorting outlet.

4. A method according to claim 2, wherein the time second data is generated in response to detection of the end of the first sorting pass, and said time second data is assigned to the signatures of the mailpieces in the sorting outlets.

5. A method according to any preceding claim, wherein said third and fourth data are placed on a tray label (10) in the form of a bar code that is readable by a scanner.

## Patentansprüche

1. Verfahren zur Sortierung von Postsendungen in mindestens zwei Sortierdurchläufen in einer Sortiermaschine (1) mit Sortierausgängen (7), zu welchen die Sendungen von einem Entstapelungseingang (2) aus geleitet werden, wobei in diesem Verfahren in einem ersten Sortierdurchlauf Bilder der Oberfläche der Sendungen gebildet werden, um erste Bildsignaturen (V-id) abzuleiten, die als eindeutige Kennungen für die Sendungen in der Maschine dienen, und wobei in einem zweiten Sortierdurchlauf der Sendungen erneut ein Bild der Oberfläche einer laufenden Sendung gebildet wird, um eine laufende Bildsignatur abzuleiten, die der laufenden Sendung zugeordnet ist, und eine Gruppe von ersten Bildsignaturen abgetastet wird, die in einem Abtastspeicher (31, 32) zusammengefasst sind, um eine Übereinstimmung mit dieser laufenden Signatur zu erkennen, und wobei die Sendungen zwischen den zwei Sortierdurchläufen mit Hilfe von Speicherbehältern (8) manuell von den Sortierausgängen zu den Entstapelungseingängen übergeben werden, **dadurch gekennzeichnet, dass** es außerdem die folgenden Schritte umfasst:
- beim ersten Sortierdurchlauf, Speichern (13) im Maschinenspeicher einer in
Korrespondenz zu jeder ersten Signatur, die einer Sendung zugeordnet ist, ersten Bezeichnungsinformation (ST), die eine Nummer des Sortierausgangs angibt, zu welchem die Sendung geleitet wird; Speichern (17) im Speicher einer in Korrespondenz zu der ersten Signatur, die dieser Sendung zugeordnet ist, zweiten Zeitinformation (TS), die von einem Zeitgeber stammt; Aufbringen auf jeden Speicherbehälter, in welche die von einem Sortierausgang kommenden Sendungen übergeben werden, eines Etiketts (9), auf welchem eine dritte Bezeichnungsinformation (ST), die die Nummer dieses Sortierausgangs angibt, und eine vierte Zeitinformation (Hb) codiert sind, die vom Zeitgeber stammt,
- beim zweiten Sortierdurchlauf, wenn ein mit Sendungen gefüllter laufender
Speicherbehälter am Entstapelungseingang präsentiert wird, Wiedererlangen (20) dieser dritten und vierten Information vom auf dem laufenden Behälter aufgebrachten Etikett, Identifizieren (23) unter den ersten im Speicher gespeicherten Signaturen einer Bezugssignatur, die eine erste und eine zweite Information aufweist, die jeweils der von dem Etikett des laufenden Behälters wiedererlangten dritten und vierten Information entspricht, und Laden (24) der ersten Signaturen in den Abtastspeicher, die zu dieser Bezugssignatur mit der gleichen Bezeichnungsinformation chronologisch angrenzen, wobei die Zahl chronologisch angrenzender erster Signaturen im Abtastspeicher von den maximalen Sendungsspeicherkapazitäten in einem Behälter und in einem Sortierausgang ausgehend bestimmt wird.

2. Verfahren nach Anspruch 1, wobei die Zahl der Sendungen, die im ersten Sortierdurchlauf zu jedem Sortierausgang geleitet werden, gezählt wird, eine zweite Zeitinformation erzeugt wird, wenn erkannt wird, dass ein Sortierausgang eine vorbestimmte Zahl von Sendungen gesammelt hat, und den Signaturen dieser Sendungen diese zweite Zeitinformation zugewiesen wird.

3. Verfahren nach Anspruch 2, wobei die Sammelaktivität jedes Sortierausgangs
im ersten Sortierdurchlauf überwacht wird, die zweite Zeitinformation erzeugt wird, wenn erkannt wird, dass ein Sortierausgang eine vorbestimmte Zeit lang keine Sendung gesammelt hat, und den Signaturen der Sendungen in diesem Sortierausgang diese zweite Zeitinformation zugewiesen wird.

4. Verfahren nach Anspruch 2, wobei die zweite Zeitinformation in Antwort auf die Erkennung der Beendigung des ersten Sortierdurchlaufs erzeugt wird und den Signaturen der Sendungen in den Sortierausgängen diese zweite Zeitinformation zugewiesen wird.

5. Verfahren nach einem der vorherigen Ansprüche, wobei die dritte und vierte
Information in Form eines mit einem Scanner lesbaren Strichcodes auf ein Behälteretikett (10) aufgebracht wird.
